# EUROPÄISCHE PATENTSCHRIFT

(11) **EP 2 972 698 B1**
(45) Veröffentlichungstag und Bekanntmachung des Hinweises auf die Patenterteilung: **02.08.2017**
(21) Anmeldenummer: 14706482.8
(22) Anmeldetag: 21.02.2014
(51) Int. Cl.: G06F 3/041, B60K 37/06

(54) **VERFAHREN ZUM BETREIBEN EINES BERÜHRUNGSEMPFINDLICHEN BEDIENSYSTEMS UND VORRICHTUNG MIT EINEM SOLCHEN BEDIENSYSTEM**
METHOD FOR OPERATING A TOUCH-SENSITIVE CONTROL SYSTEM AND DEVICE HAVING SUCH A CONTROL SYSTEM
PROCÉDÉ PERMETTANT DE FAIRE FONCTIONNER UN SYSTÈME DE COMMANDE TACTILE ET DISPOSITIF POURVU D'UN TEL SYSTÈME DE COMMANDE

(30) Priorität: 15.03.2013 DE 102013004620
(43) Veröffentlichungstag der Anmeldung: 20.01.2016
(73) Patentinhaber: Audi AG, 85045 Ingolstadt (DE)
(72) Erfinder: KÜHNE, Marcus, 85051 Ingolstadt (DE); SCHNEIDER, Johann, 85139 Wettstetten (DE)
(74) Vertreter: Brandt, Kai
(86) Internationale Anmeldenummer: PCT/EP2014/000463
(87) Internationale Veröffentlichungsnummer: WO 2014/139632

(56) Entgegenhaltungen:
- US-A1- 2011 141 047

## Beschreibung

Die Erfindung betrifft ein Verfahren zum Betreiben eines Bediensystems, insbesondere eines Kraftwagens, sowie eine Vorrichtung mit einem solchen Bediensystem. Die US 2011/141047 A1 wird als nächstliegender Stand der Technik erachtet, und zeigt ein Verfahren zum Betreiben eines Bediensystems, insbesondere eines Kraftwagens, mit den Schritten:
- Erfassen mittels einer Druckerfassungseinrichtung, ob ein Bedienfeld des Bediensystems durch ein Betätigungselement mit einem Druck beaufschlagt wird; und
- mittels einer Erfassungseinrichtung die Größe einer das Bedienfeld berührenden Auflagefläche des Betätigungselements erfasst wird.

Die DE 10 2009 036369 A1 zeigt ein Verfahren zur Steuerung eines kapazitiven Bedienelements eines Fahrzeugs. Das Bedienelement ist dabei in mehrere Detektionszonen aufgeteilt, wobei eine jeweilige Verweilzeit einer Fingerspitze erfasst werden kann.

Die EP 0780981 A2 zeigt ein Berührungs-Sensorelement, bei welchem die Auslösung eines Schaltsignals in Abhängigkeit von einem vorgegebenen Schwellwert eines Signalpegels sowie einer vorgegebenen zeitlichen Dauer erfolgt.

Die DE 10 2010 039545 A1 zeigt ein Verfahren zum Erfassen von Bewegungen relativ zu einem kapazitiven Sensorsystem. Ungewollte Fehlauslösungen werden durch entsprechend festgelegte Zeiträume vermieden, innerhalb derer Schwellwerte überschritten werden müssen, bevor eine Auslösung des kapazitiven Sensorsystems überhaupt erfolgt.

Die DE 10 2008 050181 A1 zeigt ein Verfahren zur Schaltschwellenwerterkennung in kapazitiven Schaltern. Die Identifizierung eines Schaltpunktes erfolgt dabei durch Detektion einer entsprechenden Auflagefläche eines Fingers.

Es ist die Aufgabe der vorliegenden Erfindung, ein Verfahren sowie eine Vorrichtung der eingangs genannten Art bereitzustellen, mittels welchem unerwünschte Fehlauslösungen eines berührungsempfindlichen Bediensystems verringert werden können.

Diese Aufgabe wird durch ein Verfahren zum Betreiben eines berührungsempfindlichen Bedienelements sowie durch eine Vorrichtung mit einem solchen Bediensystem mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren zum Betreiben eines Bediensystems, insbesondere eines Kraftwagens, wird mittels einer Druckerfassungseinrichtung erfasst, ob ein Bedienfeld des Bediensystems durch ein Betätigungselement mit einem größeren Druck als mit einem vorgegebenen Druckschwellwert beaufschlagt wird, und falls erfasst wird, dass das Bedienfeld mit einem größeren Druck als mit dem Druckschwellwert beaufschlagt wird, wird wenigstens ein Betätigungssignals mittels des Bedienfelds ausgegeben. Zur Vermeidung unerwünschter Betätigungen bzw. Auslösungen des Bediensystems ist es bei dem erfindungsgemäßen Verfahren vorgesehen, dass mittels einer Erfassungseinrichtung die Größe einer das Bedienfeld berührenden Auflagefläche des Betätigungselements erfasst und das Betätigungssignal nur dann ausgegeben wird, falls während der Druckausübung auf das Bedienfeld erfasst worden ist, dass die Auflagefläche des Betätigungselements um einen vorgegebenen Faktor verändert worden ist. Unter Betätigungselement ist beispielsweise ein Finger eines Nutzers zu verstehen, mittels welchem das Bedienfeld des Bediensystems betätigt bzw. berührt wird. Bei der das Bedienfeld berührenden Auflagefläche des Betätigungselements kann es sich im Falle eines Fingers beispielsweise um eine Fingerkuppe bzw. eine Fingerspitze eines Zeigefingers oder eines beliebigen anderen Fingers des Nutzers handeln.

Die der Erfindung zugrunde liegende Idee ist also, dass als eine Art Kontrollmechanismus bei der Bedienung des Bedienfelds, bei welchem es sich beispielsweise um ein Touchpad oder ähnliches handeln kann, immer erfasst wird, ob eine aufliegende Fingerfläche oder eine andere das Bedienfeld berührende Auflagefläche um einen vorgegebenen Faktor, beispielsweise um einen zu definierenden Prozentsatz, verändert wird. Die als relevante Größe herangezogene vorgegebene Veränderung in Form eines Faktors bringt dabei den Vorteil mit sich, dass physische Unterschiede zwischen den Fingern unterschiedlicher Nutzer nicht ergebnisrelevant sind, da sich die Veränderung der Auflagefläche bei unterschiedlichen Nutzern in einem ähnlichen Rahmen bewegt. Die Erfassung der Änderung der Auflagefläche während der Betätigung des Bedienfelds wird dabei jedoch nicht zur Druckerfassung und einer damit gegebenenfalls verbundenen Auslösung des Bedienfelds verwendet, sondern lediglich zur Absicherung gegenüber unerwünschten Fehlauslösungen eingesetzt.

In vorteilhafter Ausgestaltung der Erfindung ist es vorgesehen, dass das Betätigungssignal nur dann ausgegeben wird, falls erfasst worden ist, dass die Auflagefläche des Betätigungselements um den vorgegebenen Faktor vergrößert worden ist. Im Falle eines Fingers wird also erfasst, ob die das Bedienfeld berührende Auflagefläche des Fingers um den vorgegebenen Faktor vergrößert worden ist, wobei nur in diesem Fall das Bestätigungssignal mittels des Bedienfelds ausgegeben wird. Alternativ ist es auch möglich, dass das Bestätigungssignal nur dann ausgegeben wird, falls nach der Vergrößerung der Auflagefläche um den vorgegebenen Faktor erfasst worden ist, dass die Auflagefläche des Betätigungselements anschließend um den vorgegebenen Faktor oder einen weiteren vorgegebenen Faktor verkleinert worden ist. Mit anderen Worten wird also im Vorfeld einer entsprechenden Betätigung des Bedienfelds beispielsweise überprüft, ob die aufliegende Fingerfläche um einen zu definierenden Prozentsatz erhöht und/oder vor einem Release bzw. einer entsprechenden Druckentlastung wieder adäquat reduziert worden ist. Das Bediensystem kann also entweder derart betrieben werden, dass das Bestätigungssignal nur dann ausgegeben wird, falls eine entsprechende Vergrößerung der Auflagefläche des Betätigungselements erfasst worden ist, oder derart, dass das Betätigungssignal erst dann ausgegeben wird, falls eine entsprechende Vergrößerung der Fingerauflagefläche mit einem entsprechenden anschließenden Verkleinerung der Fingerauflagefläche erfasst worden ist.

Eine weitere vorteilhafte Ausführungsform der Erfindung sieht vor, dass die Dauer erfasst wird, während welcher die Vergrößerung um den vorgegebenen Faktor und/oder die Verkleinerung der Auflagefläche um den vorgegebenen oder weiteren vorgegebenen Faktor erfolgt, und das Bestätigungssignal nur dann ausgegeben wird, falls die Veränderung der Auflagefläche innerhalb einer vorgegebenen Zeitdauer erfolgt ist. Dies trägt zu einer Verringerung unerwünschter Fehlauslösungen durch einen Bediener bei. Die vorgegebene Dauer ist dabei vorzugsweise derart festgelegt, dass diese einer typischen Betätigungsdauer eines Nutzers entspricht, welcher das Bedienfeld bedient. Sollte beispielsweise die Hand des Nutzers auf dem Bedienfeld zum Liegen kommen und dabei eine relativ langsame Druckerhöhung gegeben sein, würde aufgrund der gleichzeitigen Erfassung, ob die Druckausübung in Kombination mit einer entsprechenden Vergrößerung der Auflagefläche innerhalb des vorgegebenen Zeitfensters erfolgt, dazu führen, dass keine unerwünschte Auslösung des Bedienfelds erfolgt.

Eine weitere vorteilhafte Ausführungsform der Erfindung sieht vor, dass die Dauer erfasst wird, während welcher die Druckausübung auf das Bedienfeld erfolgt, und das Bestätigungssignal nur dann ausgegeben wird, falls die Überschreitung des Druckschwellwerts innerhalb einer vorgegebenen Zeitdauer erfolgt ist. Dies verringert zusätzlich die Wahrscheinlichkeit einer unerwünschten Fehlauslösung, da zusätzlich auch noch die Dauer der Druckausübung und gegebenenfalls eine entsprechende Überschreitung des Druckschwellwertes überwacht wird.

In weiterer vorteilhafter Ausgestaltung der Erfindung ist es vorgesehen, dass als Bestätigungssignal eine haptisch erfassbare Rückmeldung in Form einer zumindest teilweisen Verlagerung des Bedienfelds in wenigstens eine Raumrichtung, insbesondere entgegen der Richtung der Druckaufbringung, ausgegeben wird. Bei der haptisch erfassbaren Rückmeldung kann es sich um eine Art simulierten mechanischen Klick handeln, welcher möglichst realitätsnah durch eine entsprechende Verlagerung des Bedienfelds erfolgt. Mit anderen Worten wird also mittels des Bestätigungssignals eine mechanische Betätigung bzw. ein mechanisches Anklicken des Bedienfelds nachgebildet.

Gemäß einer weiteren vorteilhaften Ausführungsform der Erfindung kann es vorgesehen sein, dass als Bestätigungssignal alternativ oder auch zusätzlich ein akustisches Signal ausgegeben wird. Dieses akustische Signal kann beispielsweise eine Art Klickgeräusch sein, mittels welchem ein üblicherweise bei der Betätigung eines mechanischen Schalters auftretendes Geräusch nachgeahmt wird, so dass dem Nutzer bei der Bedienung des Bedienfelds eine zusätzliche akustische Rückmeldung gegeben wird.

Gemäß einer weiteren vorteilhaften Ausführungsform der Erfindung ist es vorgesehen, dass die Erfassung der Dauer, während welcher die Veränderung der Auflagefläche und/oder die Druckausübung auf das Bedienfeld erfolgt, begonnen wird, sobald eine Berührung des Bedienfelds mittels des Bedienelements erfasst worden ist. Sollte also beispielsweise eine Hand, ein Finger oder dergleichen auf dem Bedienfeld zum Liegen kommen, wird die Zeiterfassung bzw. die Erfassung der Dauer gestartet. In Kombination mit einem entsprechend festgelegten Schwellwert für die Flächenveränderung und/oder die Druckausübung können unerwünschte Auslösungen des Bedienfelds verhindert werden. Ein typischer Fall bei einer Anwendung innerhalb eines Kraftwagens könnte beispielsweise sein, dass eine Hand bzw. ein Teil der Hand des Nutzers auf dem Bedienfeld abgelegt ist, wobei anschließend eine Bodenwelle überfahren wird, so dass eine entsprechende Druckerhöhung und Flächenvergrößerung erfolgen würde. Dadurch, dass zusätzlich die Dauer erfasst wird, können insbesondere in solchen Fällen unerwünschte Fehlauslösungen des Bedienfelds vermieden werden. Sollte nämlich die Hand, ein Finger oder dergleichen eines Nutzers auf dem Bedienfeld eine längere Zeit liegen, anschließend eine entsprechende Vergrößerung der Auflagefläche und/oder auch eine entsprechende Druckausübung über den Schwellwert hinaus bei Überfahren einer Fahrbahnunebenheit oder dergleichen erfolgen, erfolgt keine Auslösung des Bedienfelds mit einer entsprechenden Auslösung des Bestätigungssignals, da als zusätzliche Bedingung die Zeitdauer erfasst worden ist, welche in solch einem Fall größer als die vorgegebene Zeitdauer wäre. Eine erneute Auslösung bzw. Betätigung des Bedienfelds mit einem entsprechenden Bestätigungssignal könnte also erst dann wieder erfolgen, wenn der Nutzer seine Hand bzw. seinen Finger oder dergleichen von dem Bedienfeld entfernt und zwecks Betätigung des Bedienfelds dieses erneut mit einem entsprechenden Druck und einer entsprechenden damit einhergehenden Vergrößerung der Fingerauflagefläche betätigt.

Die erfindungsgemäße Vorrichtung umfasst ein Bediensystem, eine Druckerfassungseinrichtung, welche dazu ausgelegt ist, zu erfassen, ob ein Bedienfeld des Bediensystems durch ein Betätigungselement mit einem größeren Druck als mit einem vorgegebenen Druckschwellwert beaufschlagt wird; eine Steuereinrichtung, welche dazu ausgelegt ist, falls erfasst wird, dass das Bedienfeld mit einem größeren Druck als mit dem Druckschwellwert beaufschlagt wird, die Ausgabe wenigstens eines Bestätigungssignals mittels des Bedienfelds zu bewirken. Die erfindungsgemäße Vorrichtung zeichnet sich dadurch aus, dass das Bediensystem eine Erfassungseinrichtung umfasst, welche dazu ausgelegt ist, die Größe einer das Bedienfeld berührenden Auflagefläche des Bestätigungselements zu erfassen, wobei die Steuereinrichtung dazu ausgelegt ist, eine Ausgabe des Bestätigungssignals nur dann zu bewirken, falls während der Druckausübung auf das Bedienfeld erfasst worden ist, dass die Auflagefläche des Betätigungselements um einen vorgegebenen Faktor verändert worden ist. Vorteilhafte Ausführungen des erfindungsgemäßen Verfahrens sind dabei als vorteilhafte Ausführungen der Vorrichtung zu verstehen. Die Vorrichtung umfasst dabei insbesondere Mittel, mit dem die Verfahrensschritte durchführbar sind.

In vorteilhafter Ausgestaltung der Vorrichtung ist es vorgesehen, dass die Vorrichtung ein Kraftwagen, ein Smartphone, ein Notebook oder ein stationärer Computer ist, in welchem das Bediensystem integriert ist. Mit anderen Worten kann die erfindungsgemäße Vorrichtung bzw. das Bediensystem sowohl bei einem Kraftwagen, einem Smartphone, einem Notebook als auch bei einem stationären Computer Anwendung finden.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Ausführungsbeispiele der Erfindung werden nachfolgend anhand schematischer Zeichnungen näher erläutert. Es zeigen:
- Fig. 1: eine schematische Seitenansicht auf ein ein Bedienfeld umfassendes Bediensystem, welches gerade mittels eines Fingers durch einen Nutzer betätigt wird; und in
- Fig. 2: eine schematische Draufsicht auf das in Fig. 1 gezeigte Bediensystem.

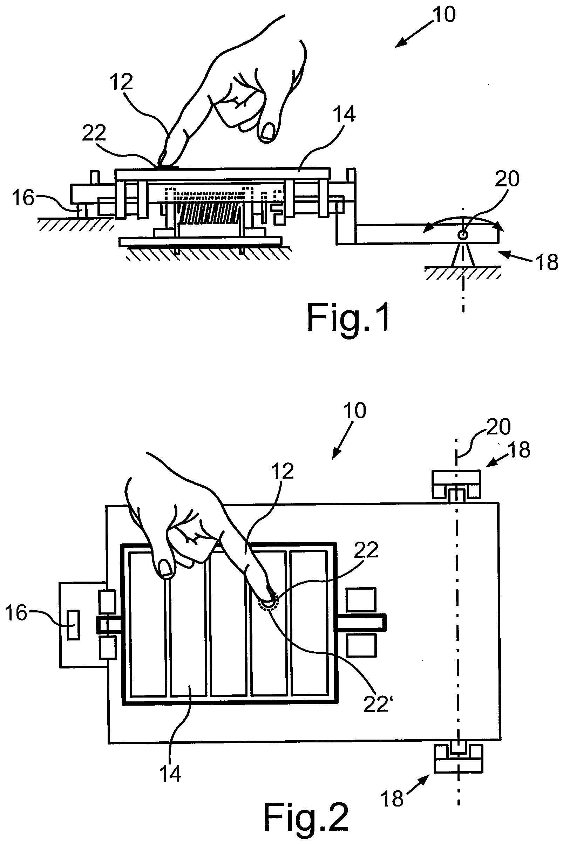

Ein insgesamt mit 10 bezeichnetes berührungsempfindliches Bediensystem ist in einer schematischen Seitenansicht in Fig. 1 gezeigt. Ein nicht näher bezeichneter Nutzer berührt gerade mit seinem als Betätigungselement dienenden Finger 12 ein Bedienfeld 14 des Bediensystems 10, bei welchem es sich im vorliegenden Fall um ein berührungsempfindliches Touchpad handelt. Alternativ kann es sich bei dem Bedienfeld 14 auch um ein Touchscreen handeln, welches beispielsweise resisitiv, kapazitiv, optisch oder induktiv betrieben werden kann.

Das Bediensystem 10 umfasst einen weglosen Drucksensor 16, welcher beispielsweise als Dehnmessstreifen ausgebildet sein kann. Der Drucksensor 16 ist Teil einer nicht näher bezeichneten Druckerfassungseinrichtung, welche dazu ausgelegt ist, zu erfassen, ob das Bedienfeld 14 mittels des Fingers 12 mit einem größeren Druck als mit einem vorgegebenen Druckschwellwert beaufschlagt wird. Des Weiteren kann innerhalb eines Lagers 18 ein Sensor vorgesehen sein, mittels welchem eine Rotation um eine Drehachse 20 des Lagers 18 zur Kraftauswertung erfasst werden kann. Dieser Sensor kann ebenfalls Teil der Druckerfassungseinrichtung sein.

Das Bediensystem 10 umfasst des Weiteren eine hier nicht dargestellte Erfassungseinrichtung, welche dazu ausgelegt ist, die Größe einer das Bedienfeld 14 berührenden Auflagefläche 22 des Fingers 12 zu erfassen. Eine hier nicht dargestellte Steuereinrichtung des Bediensystems 10 ist dabei dazu ausgelegt, eine Ausgabe eines Bestätigungssignals nur dann zu bewirken, falls während einer Druckausübung auf das Bedienfeld 14 erfasst worden ist, dass die Auflagefläche 22 des Fingers 12 um einen vorgegebenen Faktor verändert worden ist. Zusätzlich kann die Steuereinrichtung noch dazu ausgelegt sein, die Ausgabe des Bestätigungssignals mittels des Bedienfelds 14 nur dann zu bewirken, wenn zusätzlich erfasst wird, dass das Bedienfeld 14 mit einem größerem Druck als mit einem vorgegebenen Druckschwellwert beaufschlagt wird.

Das Bediensystem 10 kann beispielsweise in einem Kraftwagen, einem Smartphone, einem Notebook oder auch innerhalb eines stationären Computers integriert sein. Für die nachfolgende Erläuterung eines Verfahrens zum Betreiben des Bediensystems 10 sei davon ausgegangen, dass das Bediensystem 10 in einem Kraftwagen integriert ist. Die nachfolgend beschriebenen Verfahrensschritte können dabei aber genauso gut bei einer Integration des Bediensystems 10 in einem Smartphone, in einem Notebook oder auch in einem stationären Computer durchgeführt werden.

In Fig. 2 ist das Bediensystem 10 in einer schematischen Draufsicht gezeigt. Sobald der Nutzer seinen Finger 12 auf das Bedienfeld 14 auflegt, wird mittels der Druckerfassungseinrichtung erfasst, ob das Bedienfeld 14 mit dem Finger 12 mit einem größeren Druck als mit einem vorgegebenen Druckschwellwert beaufschlagt wird. Zusätzlich wird mittels der Erfassungseinrichtung die Größe der das Bedienfeld 14 berührenden Auflagefläche 22 erfasst. Falls erfasst wird, dass das Bedienfeld 14 zum einen mit einem größeren Druck als mit dem Druckschwellwert beaufschlagt wird und zum anderen während der Druckausübung auf das Bedienfeld 14 erfasst worden ist, dass die Auflagefläche 22 des Fingers 12 um einen entsprechend vorgegebenen Faktor verändert worden ist, wird ein entsprechendes Bestätigungssignal mittels des Bedienfelds 14 ausgegeben.

Während der Betätigung des Bedienfelds wird die Auflagefläche 22 des Fingers 12 derart vergrößert, dass sich die mit dem Bezugszeichen 22' bezeichnete Auflagefläche ergibt. Vorzugsweise wird das Bestätigungssignal nur dann ausgegeben, falls erfasst worden ist, dass die Auflagefläche 22 des Betätigungselements um den entsprechend vorgegebenen Faktor auf die Auflagefläche 22' vergrößert worden ist. Alternativ kann es auch vorgesehen sein, dass das Bestätigungssignal nur dann ausgegeben wird, falls nach der Vergrößerung der Auflagefläche 22 um den vorgegebenen Faktor bis auf die Auflagefläche 22' die Auflagefläche 22' des Fingers 12 anschließend wiederum um denselben vorgegebenen Faktor oder einen weiteren anderen vorgegebenen Faktor verkleinert worden ist. Mit anderen Worten kann es vorgesehen sein, dass das Bestätigungssignal nur dann ausgegeben wird, wenn eine entsprechende Flächenvergrößerung und eine entsprechende anschließende Flächenverkleinerung der Fingerauflagefläche erfasst worden ist.

Während der Betätigung des Bedienfelds 14 wird zusätzlich die Dauer erfasst, während welcher die Vergrößerung um den vorgegebenen Faktor und/oder Verkleinerung der Auflagefläche 22 um den vorgegebenen oder weiteren vorgegebenen Faktor erfolgt, wobei das Bestätigungssignal nur dann ausgegeben wird, falls die Veränderung der Auflagefläche 22 innerhalb einer vorgegebenen Zeitdauer erfolgt. Gleichzeitig wird auch die Dauer erfasst, während welcher die Druckausübung auf das Bedienfeld 14 erfolgt, wobei die Ausgabe des Bestätigungssignals auch nur dann ausgegeben wird, falls die Überschreitung des Druckschwellwerts innerhalb einer vorgegebenen Zeitdauer erfolgt ist.

Als Bestätigungssignal wird eine haptisch erfassbare Rückmeldung in Form einer zumindest teilweisen Verlagerung des Bedienfelds 14 entgegen der Richtung der Druckaufbringung ausgegeben. Mit anderen Worten wird zur Nachahmung eines mechanischen Klicks das Bedienfeld 14 entsprechend bewegt bzw. verlagert, so dass für den Nutzer eine Art Schalterbetätigung wahrgenommen werden kann, sobald eine Flächenvergrößerung der Auflagefläche 22 des Fingers 12 in Kombination mit einer entsprechenden Druckaufbringung auf die Bedienfläche 14 erfasst worden ist. Zusätzlich kann das Bestätigungssignal auch noch mit einem akustischen Signal verbunden werden, beispielsweise in Form eines Klickgeräusches, so dass dem Nutzer auch noch eine akustische Rückmeldung gegeben wird, dass eine Betätigung des Bedienfelds 14 mittels des Fingers 12 erfolgt ist.

Insbesondere durch die kombinierte Berücksichtigung der Vergrößerung und/oder auch Verkleinerung der Fingerauflagefläche gekoppelt an eine entsprechend Dauer, während welcher dies erfolgen muss, können unerwünschte Fehlauslösungen des Bedienfelds 14 vermieden werden. Beispielsweise kann es, je nach dem wo das Bedienfeld 14 innerhalb beispielsweise eines Kraftwagens angeordnet ist, durchaus passieren, dass der Nutzer seinen Finger 12 oder auch seine gesamte Hand auf dem Bedienfeld 14 platziert hat. Fährt der Nutzer bzw. Fahrer nun beispielsweise über eine Bodenunebenheit, erfolgt eine unbeabsichtigte bzw. ungewollte Druckbeaufschlagung des Bedienfelds 14. Dadurch, dass die Dauer der Druckbeaufschlagung und Flächenvergrößerung immer schon dann gemessen wird, sobald der Finger 12 oder auch beispielsweise die gesamte Hand des Nutzers auf dem Bedienfeld 14 zum Liegen kommt, kann eine unerwünschte Auslösung des Bedienfelds 14 beim Überfahren einer Fahrbahnunebenheit vermieden werden, da die Betätigung des Bedienfelds 14 mit einem entsprechenden Druck und mit der damit einhergehenden überwachten Flächenvergrößerung des Fingers 12 während einer typischen Zeitdauer erfolgen muss, damit das Bestätigungssignal überhaupt ausgegeben wird.

Sollte also ein Nutzer seinen Finger 12, weitere Finger oder auch seine gesamte Hand auf das Bedienfeld 14 für eine längere Zeitdauer auflegen, muss der Nutzer seinen Finger 12 oder seine gesamte Hand zunächst für eine vorbestimmte Zeitdauer von dem Bedienfeld nehmen, bevor eine Betätigung des Bedienfelds 14 erfolgen kann. Alternativ kann es auch ausreichend sein, wenn der Nutzer zumindest den Finger 12 kurz anhebt, mit welchem er das Bedienfeld 14 betätigen möchte.

## Patentansprüche

1. Verfahren zum Betreiben eines Bediensystems (10), insbesondere eines Kraftwagens, mit den Schritten:
- Erfassen mittels einer Druckerfassungseinrichtung, ob ein Bedienfeld (14) des Bediensystems (10) durch ein Betätigungselement (12) mit einem größeren Druck als mit einem vorgegebenen Druckschwellwert beaufschlagt wird;
- Falls erfasst wird, dass das Bedienfeld (14) mit einem größeren Druck als mit dem Druckschwellwert beaufschlagt wird: Ausgeben wenigstens eines Bestätigungssignals mittels des Bedienfelds (14);
wobei
- mittels einer Erfassungseinrichtung die Größe einer das Bedienfeld (14) berührenden Auflagefläche (22, 22') des Betätigungselements (12) erfasst wird;
- das Bestätigungssignal nur dann ausgegebenen wird, falls während der Druckausübung auf das Bedienfeld (14) erfasst worden ist, dass die Auflagefläche (22, 22') des Betätigungselements (12) um einen vorgegebenen Faktor verändert worden ist, wobei die Erfassung der Änderung der Auflagefläche (22, 22') zur Absicherung gegenüber unerwünschten Fehlauslösungen eingesetzt wird.

2. Verfahren nach Anspruch 1,
**dadurch gekennzeichnet, dass**
das Bestätigungssignal nur dann ausgegebenen wird, falls erfasst worden ist, dass die Auflagefläche (22, 22') des Betätigungselements (12) um den vorgegebenen Faktor vergrößert worden ist.

3. Verfahren nach Anspruch 2,
**dadurch gekennzeichnet, dass**
das Bestätigungssignal nur dann ausgegebenen wird, falls nach der Vergrößerung der Auflagefläche (22, 22') um den vorgegebenen Faktor erfasst worden ist, dass die Auflagefläche (22, 22') des Betätigungselements (12) anschließend um den vorgegebenen Faktor oder einen weiteren vorgegebenen Faktor verkleinert worden ist.

4. Verfahren nach einem der vorhergehenden Ansprüche,
**dadurch gekennzeichnet, dass**
die Dauer erfasst wird, während welcher die Vergrößerung um den vorgegebenen Faktor und/oder Verkleinerung der Auflagefläche (22, 22') um den vorgegebenen oder weiteren vorgegebenen Faktor erfolgt, und das Bestätigungssignal nur dann ausgegeben wird, falls die Veränderung der Auflagefläche (22, 22') innerhalb einer vorgegebenen Zeitdauer erfolgt ist.

5. Verfahren nach einem der vorhergehenden Ansprüche,
**dadurch gekennzeichnet, dass**
die Dauer erfasst wird, während welcher die Druckausübung auf das Bedienfeld (14) erfolgt, und das Bestätigungssignal nur dann ausgegeben wird, falls die Überschreitung des Druckschellwerts innerhalb einer vorgegebenen Zeitdauer erfolgt ist.

6. Verfahren nach einem der vorhergehenden Ansprüche,
**dadurch gekennzeichnet, dass**
als Bestätigungssignal eine haptisch erfassbare Rückmeldung in Form einer zumindest teilweisen Verlagerung des Bedienfelds (14) in wenigstens eine Raumrichtung, insbesondere entgegen der Richtung der Druckaufbringung, ausgegeben wird.

7. Verfahren nach einem der vorhergehenden Ansprüche,
**dadurch gekennzeichnet, dass**
als Bestätigungssignal eine akustisches Signal ausgegeben wird.

8. Verfahren nach einem der vorhergehenden Ansprüche,
**dadurch gekennzeichnet, dass**
die Erfassung der Dauer, während welcher die Veränderung der Auflagefläche (22, 22') und/oder die Druckausübung auf das Bedienfeld (14) erfolgt, begonnen wird, sobald eine Berührung des Bedienfelds (14) mittels des Bedienelements (12) erfasst worden ist.

9. Vorrichtung mit einem Bediensystem (10), mit
- einer Druckerfassungseinrichtung, welche dazu ausgelegt ist, zu erfassen, ob ein Bedienfeld (14) des Bediensystems (10) durch ein Betätigungselement (12) mit einem größeren Druck als mit einem vorgegebenen Druckschwellwert beaufschlagt wird;
- einer Steuereinrichtung, welche dazu ausgelegt ist, falls erfasst wird, dass das Bedienfeld (14) mit einem größeren Druck als mit dem Druckschwellwert beaufschlagt wird, die Ausgabe wenigstens ein Bestätigungssignals mittels des Bedienfelds (14) zu bewirken;
wobei
- das Bediensystem (10) eine Erfassungseinrichtung umfasst, welche dazu ausgelegt ist, die Größe einer das Bedienfeld (14) berührenden Auflagefläche (22, 22') des Betätigungselements (12) zu erfassen;
- die Steuereinrichtung dazu ausgelegt ist, eine Ausgabe des Bestätigungssignals nur dann zu bewirken, falls während der Druckausübung auf das Bedienfeld (14) erfasst worden ist, dass die Auflagefläche (22, 22') des Betätigungselements (12) um einen vorgegebenen Faktor verändert worden ist, wobei die Erfassung der Änderung der Auflagefläche (22, 22') zur Absicherung gegenüber unerwünschten Fehlauslösungen eingesetzt wird.

10. Vorrichtung nach Anspruch 9,
**dadurch gekennzeichnet, dass**
die Vorrichtung ein Kraftwagen, ein Smartphone, ein Notebook oder ein stationärer Computer ist, in welchem das Bediensystem (10) integriert ist.

## Claims

1. Method for operating an operating system (10), in particular of a motor vehicle with the steps:
- detecting by means of a pressure detection device whether greater pressure than a predefined pressure threshold value is applied to an operating field (14) of the operating system (10) by a actuation element (12);
- if it is detected that greater pressure than the pressure threshold value is applied to the operating field (14): emitting at least one actuation signal by means of the operating field (14);
wherein
- the size of a support surface (22, 22') of the actuation element (12) contacting the operating field (14) is detected by means of a detection device;
- the actuation signal is only then emitted, if during the exertion of pressure on the operating field (14), it has been detected that the support surface (22, 22') of the actuation element (12) has been changed by a predefined factor wherein the detection of the change of the support surface (22, 22') is used to secure against undesired false tripping.

2. Method according to claim 1,
**characterised in that**
the actuation signal is only then emitted if it has been detected that the support surface (22, 22') of the actuation element (12) has been enlarged by the predefined factor.

3. Method according to claim 2,
**characterised in that**
the actuation signal is only then emitted if after the enlarging of the support surface (22, 22') by the predefined factor, it has been detected that the support surface (22, 22') of the actuation element (12) has been subsequently reduced by the predefined factor or an addition predefined factor.

4. Method according to any one of the preceding claims,
**characterised in that**
the duration is detected during which the enlargement by the predefined factor and/or reduction of the support surface (22, 22') by the predefined or additional predefined factor takes place and the actuation signal is only then emitted if the change of the support surface (22, 22') takes place within a predefined time period.

5. Method according to any one of the preceding claims,
**characterised in that**
the duration is detected during which the exertion of pressure on the operating field (14) takes place and the actuation signal is only then emitted if the pressure threshold value is exceeded within a predefined time period.

6. Method according to any one of the preceding claims,
**characterised in that**
a haptically detectable response in the form of at least partial shifting of the operating field (14) into at least one spatial direction, in particular counter to the direction of the application of pressure is emitted as the actuation signal.

7. Method according to any one of the preceding claims,
**characterised in that**
an acoustic signal is emitted as the actuation signal.

8. Method according to any one of the preceding claims,
**characterised in that**
the detection of the duration, during which the change of the support surface (22, 22') and/or the exertion of pressure on the operating field (14) takes place, is started as soon as contact of the operating field (14) has been detected by means of the operating element (12).

9. Device with an operating system (10) comprising
- a pressure detection device which is configured to detect whether greater pressure than a predefined pressure threshold value is applied to an operation field (14) of the operating system (10) by an actuation element (12);
- a control device which is configured to effect the emission of at least one actuation signal by means of the operating field (14), if it is detected that greater pressure than the pressure threshold value is applied to the operating field (14);
wherein
- the operating system (10) comprises a detection device which is configured to detect the size of a support surface (22, 22') of the actuation element (12) contacting the operating field (14);
- the control device is configured to then effect the emission of the actuation signal only if during the exertion of pressure on the operating field (14), it has been detected that the support surface (22, 22') of the actuation element (12) has been changed by a predefined factor wherein the detection of the change of the support surface (22, 22') is used to secure against undesired false tripping.

10. Device according to claim 9,
**characterised in that**
the device is a vehicle, a smartphone, a notebook or a stationary computer in which the operating system (10) is integrated.

## Revendications

1. Procédé de fonctionnement d'un système de commande (10), en particulier d'un véhicule automobile, avec les étapes :
- détecter au moyen d'un dispositif détecteur de pression si un champ de commande (14) du système de commande (10) est soumis par un élément d'actionnement (12) à une pression plus grande qu'une valeur de seuil de pression prédéterminée ;
- s'il a été détecté que le champ de commande (14) est soumis à une pression plus grande que la valeur de seuil de pression : délivrer au moins un signal de confirmation au moyen du champ de commande (14) ;
dans lequel
- au moyen d'un dispositif détecteur, on détecte la grandeur d'une surface d'appui (22, 22'), touchant le champ de commande (14), de l'élément d'actionnement (12);
- on ne délivre le signal de confirmation que s'il a été détecté, pendant l'exercice de la pression sur le champ de commande (14), que la surface d'appui (22, 22') de l'élément d'actionnement (12) a été modifiée d'un facteur prédéterminé, la détection de la modification de la surface d'appui (22, 22') étant utilisée pour se prémunir contre des déclenchements erronés non souhaités.

2. Procédé selon la revendication 1, **caractérisé en ce qu'**on ne délivre le signal de confirmation que s'il a été détecté que la surface d'appui (22, 22') de l'élément d'actionnement (12) a été agrandie du facteur prédéterminé.

3. Procédé selon la revendication 2, **caractérisé en ce qu'**on ne délivre le signal de confirmation que s'il a été détecté, après l'agrandissement de la surface d'appui (22, 22') du facteur prédéterminé, que la surface d'appui (22, 22') de l'élément d'actionnement (12) a ensuite été diminuée du facteur prédéterminé ou d'un autre facteur prédéterminé.

4. Procédé selon l'une des revendications précédentes, **caractérisé en ce qu'**on détecte la durée pendant laquelle s'effectuent l'agrandissement de la surface d'appui (22, 22') du facteur prédéterminé et/ou sa diminution du facteur prédéterminé ou de l'autre facteur prédéterminé et **en ce qu'**on ne délivre le signal de confirmation que si la modification de la surface d'appui (22, 22') s'effectue dans les limites d'une durée prédéterminée.

5. Procédé selon l'une des revendications précédentes, **caractérisé en ce qu'**on détecte la durée pendant laquelle s'effectue l'exercice de la pression sur le champ de commande (14) et **en ce qu'**on ne délivre le signal de confirmation que si le dépassement de la valeur de seuil de pression s'effectue dans les limites d'une durée prédéterminée.

6. Procédé selon l'une des revendications précédentes, **caractérisé en ce qu'**on délivre comme signal de confirmation une réponse pouvant être détectée au niveau tactile sous la forme d'un déplacement au moins partiel du champ de commande (14) dans au moins une direction spatiale, en particulier à l'opposé de la direction de l'application de pression.

7. Procédé selon l'une des revendications précédentes, **caractérisé en ce qu'**on délivre comme signal de confirmation un signal acoustique.

8. Procédé selon l'une des revendications précédentes, **caractérisé en ce qu'**on commence la détection de la durée pendant laquelle s'effectuent la modification de la surface d'appui (22, 22') et/ou l'exercice d'une pression sur le champ de commande (14) dès qu'un contact du champ de commande (14) au moyen de l'élément de commande (12) a été détecté.

9. Dispositif avec un système de commande (10), avec
- un dispositif détecteur de pression, qui est conçu pour détecter si un champ de commande (14) du système de commande (10) est soumis par un élément d'actionnement (12) à une pression plus grande qu'une valeur de seuil de pression prédéterminée ;
- un dispositif de contrôle, qui est conçu pour, s'il a été détecté que le champ de commande (14) est soumis à une pression plus grande que la valeur de seuil de pression, délivrer au moins un signal de confirmation au moyen du champ de commande (14) ;
dans lequel
- le système de commande (10) comprend un dispositif détecteur qui est conçu pour détecter la grandeur d'une surface d'appui (22, 22'), touchant le champ de commande (14), de l'élément d'actionnement (12) ;
- le dispositif de contrôle est conçu pour ne délivrer le signal de confirmation que s'il a été détecté, pendant l'exercice de la pression sur le champ de commande (14), que la surface d'appui (22, 22') de l'élément d'actionnement (12) a été modifiée d'un facteur prédéterminé, la détection de la modification de la surface d'appui (22, 22') étant utilisée pour se prémunir contre des déclenchements erronés non souhaités.

10. Dispositif selon la revendication 9, **caractérisé en ce que** le dispositif est un véhicule automobile, un smartphone, un ordinateur portable ou un ordinateur stationnaire, dans lequel le système de commande (10) est intégré.
